(19) Europäisches Patentamt

European Patent Office

Office européen des brevets

(11) Publication number: **0 223 384 B1**

# EUROPEAN PATENT SPECIFICATION

(45) Date of publication of patent specification: **03.07.91**  (51) Int. Cl.⁵: **G01G  19/12**

(21) Application number: **86307712.9**

(22) Date of filing: **06.10.86**

(54) A vehicle load monitoring system.

(30) Priority: **05.10.85 GB 8524610**

(43) Date of publication of application:
**27.05.87 Bulletin  87/22**

(45) Publication of the grant of the patent:
**03.07.91 Bulletin  91/27**

(84) Designated Contracting States:
**AT BE CH DE ES FR GB GR IT LI LU NL SE**

(56) References cited:
**EP-A- 0 154 728**
**GB-A- 2 053 495**
**US-A- 3 857 452**

(73) Proprietor: **Manterfield, Kenneth Charles
c/o Hodgson Impey 5 Portland Terrace
GB-Newcastle Upon Tyne(GB)**

(72) Inventor: **Monkhouse, Bryan Ashford
33 Willowtree Avenue
Durham City(GB)**

(74) Representative: **Brown, Kenneth Richard et al
R.G.C. Jenkins & Co. 26 Caxton Street
London SW1H 0RJ(GB)**

## Description

FIELD OF THE INVENTION

This invention relates to a vehicle load monitoring system for a road vehicle having a tipping load carrier.

BACKGROUND TO THE INVENTION

Drivers and operators of such vehicles must be careful when loading to ensure compliance with legal restrictions on load parameters.

US Patent No. 3,857,452 discloses a load-sensing assembly on a vehicle with a tipping load carrier. The assembly comprises a number of load cells included in respective load transmitting assemblies which transmit the load of the carrier to the vehicle chassis. Each such load transmitting assembly includes a hinge pin comprising one of the load cells. Each cell is connected in an electrical bridge network, and the outputs are integrated in a summing amplifier and the result displayed by a display device located in the drivers' cab.

With this prior art arrangement, however, the driver can only determine the overall load in the load carrier; he is not given any information relating to the distribution of the load, and no account is taken of the inclination of the load carrier at the time of measurement.

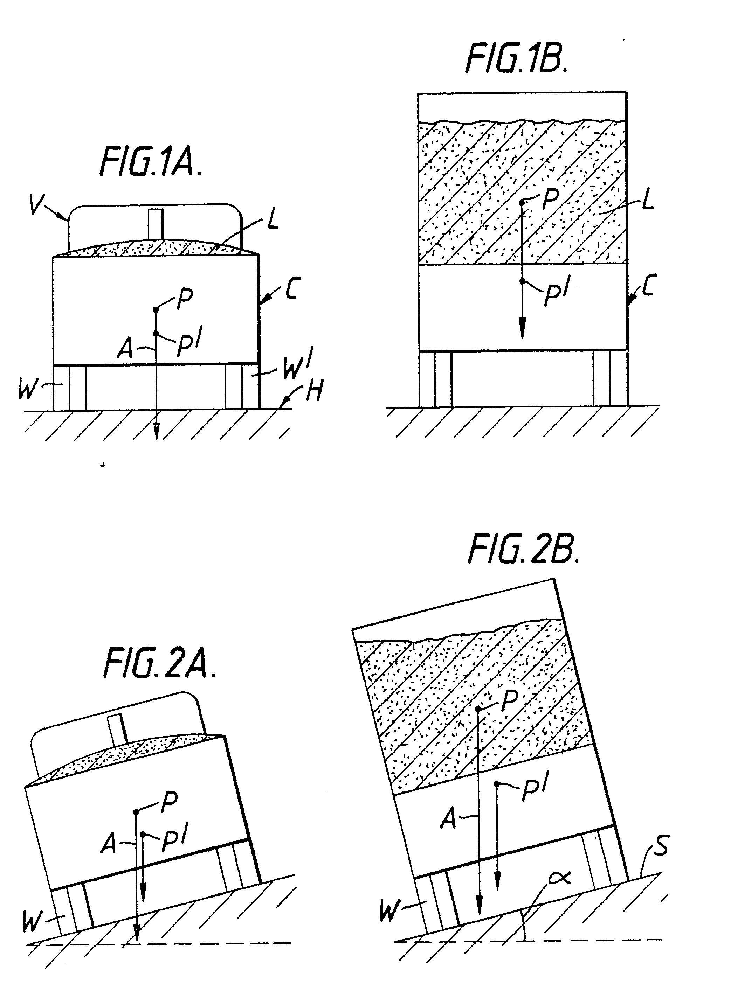

Vehicle drivers and operators must operate within strict limits not only of gross vehicle weight but individual axle weights; they must also exercise great care when unloading (by tipping the carrier) to maintain safe and stable vehicle conditions. For example, during loading, a longitudinally uneven load distribution on the carrier can lead to an excessive loading of the front or rear axle. Also, during unloading, a lateral inclination of the vehicle, e.g. due to parking on sloping ground, can lead to increasing instability as the carrier tips. This latter problem is illustrated in accompaning figures 1 and 2. In figure 1a a tipping lorry V, viewed from the rear end, is parked on horizontal ground H, and is shown with its load carrier C in the "down" position. It is assumed that the lateral distribution of load L is such that the centre of gravity P of the load is central in a lateral sense. When the carrier is tipped as shown in figure 1b, the centre of gravity P remains central between the rear wheels W and W' and the vehicle remains stable. However, if the driver attempts unloading when the vehicle is on a slope S, an unstable situation may develop as the carrier is tipped from the "down" position of figure 2a. By simple trigonometry, it can be shown that as the centre of gravity P rises it also shifts laterally with respect to the vehicle's wheels, even if it remains laterally stationary with respect to the carrier. In the situation shown in Figure 2b, the vertical line of action A of the load passing through its centre of gravity has moved substantially toward the left rear wheel W, and although the vehicle is still stable, it is approaching a state where the line A may with further tipping shift further to intersect the position of ground contact of the wheel W. As the point P shifts, the overall centre of gravity P' also rises and shifts leftwards, and it is important to avoid causing this point P' to move so far that the vehicle becomes unstable and likely to tip over sideways. This problem is compounded by the fact that the load is liable to slide sideways towards the wheel W as it moves down the carrier and consequently the point P (and therefore also point P') is likely to move relative to the carrier.

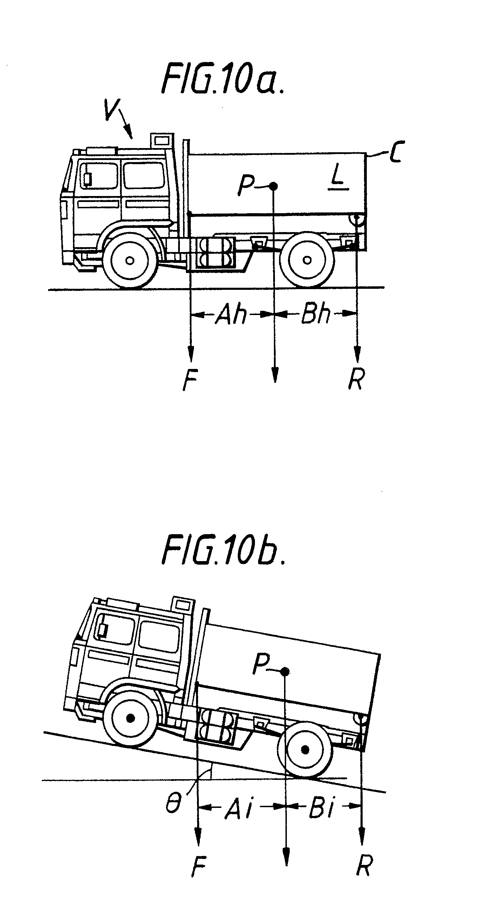

With regard to loading, drivers and operators have hitherto tended to underload their vehicles in order to provide sufficient safety margin, and there has been no economical system available which can be fitted to a tipping vehicle to give an accurate and reliable indication of load parameters during loading. One particular problem which has hitherto received little or no attention in on-board load monitoring systems is that of distortion of load sensor outputs with inclination of the vehicle. This problem is illustrated in figures 10a and 10b which show a commercial vehicle V on a horizontal surface and on a slope at an angle $\theta$ to the horizontal, respectively. Assuming that it is the centre of gravity P of the load L in the vehicle's load carrier C which is of interest and that the effect of the load is sensed at the forward and rear ends F, R of the carrier C, then it will be seen that the ratio of the distances, measured horizontally between the centre of gravity and the front and rear sensing positions changes from Ah:Bh for the horizontal condition to Ai:Bi for the inclined position. Accordingly, the ratio of the front to rear sensed weights will also change. Therefore a calculation of the position of the centre of gravity, and thus the load distribution, from the sensor outputs when the vehicle is on a slope is not valid for the horizontal position, which is the position in which the vehicle load parameters would be checked on a weighbridge. Overloading could thus occur if a vehicle is loaded up to a given axle weight calculated from measurements made on a slope and then driven onto a horizontal surface.

SUMMARY OF THE INVENTION

In one aspect the present invention seeks to reduce the susceptibility of load measurement using an on-board system in a load tipping vehicle to variation in the vehicle's inclination during measurement.

In this aspect, the present invention provides a load monitoring system for a road vehicle with a tipping load carrier, comprising load sensor means for mounting on the vehicle for sensing a plurality of weight components of the load carrier at longitudinally spaced positions thereof, signal processing means for processing the sensor outputs from said load sensor means to provide at least one output indicative of the value of a required load parameter, and visual display means for producing a visual representation of the output of the signal processing means characterised by inclination sensing means for mounting on the vehicle for providing a sensor output indicative of the inclination of the load carrier to a datum, e.g. the horizontal, and in that said signal processing means comprises a computing apparatus which is adapted to process the sensor outputs from said load and also said inclination sensor means so that said at least one output is a computer output indicative of the value of the required load parameter, resolved to the datum position of the vehicle.

The load sensor means preferably comprises a forward sensor for sensing the hydraulic pressure in a forward carrier-lifting ram mounted on the midline of the vehicle chassis and a pair of rear load sensors mounted at opposite sides of the carrier on parts of the vehicle chassis affected in a predetermined manner by the load applied to the chassis by the weight of the carrier. These rear load sensors are preferably shear pins in two pivot assemblies by which the rear end of the carrier is pivoted to the chassis.

The computing apparatus is preferably programmed to calculate from the resolved outputs of the load sensor means the magnitude of a load on the carrier and the position of its centre of gravity, and to further calculate, in accordance with predetermined vehicle parameters, those components of axle weights of the loaded vehicle which are due to said load.

The system may be operable to execute a load measuring operation after a predetermined degree of tipping of the carrier; only then is the hydraulic pressure in the ram representative of the respective weight component.

The inclination sensing means may be mounted on the vehicle chassis or on the load carrier. In the former case, the inclination of the carrier will be known as the measurement operation is carried out at a known angle of tip of the carrier relative to the chassis. In the latter case, the carrier inclination is given directly by the sensor output.

In another aspect, the present invention seeks to avoid the occurrence of situations of load and/or vehicle instability during unloading.

In this aspect, the present invention provides a load monitoring system for a road vehicle with a tipping load carrier, comprising load sensor means for mounting on the vehicle for sensing a plurality of weight components of the carrier at spaced positions thereof, and signal processing means for processing the sensor outputs from said load sensor means, characterised by inclination sensor means for mounting on the vehicle, and in that said signal processing means comprises computing apparatus which is adapted to process the sensor outputs from the load and also from the inclination sensor means before and/or during tipping of the carrier for unloading, so as to determine or predict the occurrence during the unloading of a condition of vehicle instability.

The load sensor arrangement is preferably as in the previous aspect.

A potential problem of instability can be determined, for example, using an inclinometer mounted so as to detect lateral inclination and a sensor arrangement which detects the magnitude of the load and lateral position of its centre of gravity before tipping commences. The computer can be programmed to predict from this data the likelihood of instability occurring and can energise a visual and/or audible warning device and optionally activate a tipping prevention device.

Another potential problem can be determined using additionally an inclinometer on the load carrier for detecting the tipping angle. At large tipping angles, a sudden lateral shift of the load's centre of gravity, for example due to the sudden downward movement of load material on one side of the carrier but not the other, can present a serious danger where the vehicle has significant lateral inclination. The computing apparatus may be programmed to detect such a situation and preferably to control a tipping mechanism immediately and quickly to reduce the tipping angle.

Preferably, however, these two functions are combined with a function of continuous monitoring during tipping, this being performed using outputs from three inclinometers, namely longitudinal inclinometers on the chassis and the tipping body and a lateral inclinometer on the chassis. In this case the computing apparatus is operable continuously during unloading to predict the locus of the load's centre of gravity and to determine if such locus is acceptable. The provision of two longitudinal inclinometers permits detection of the carrier inclination with respect both to the chassis and to the horizontal. Thus even when the vehicle is parked on an incline, the exact stage of tipping is always known without the need to memorize inclination data before the commencement of tipping.

The computing apparatus is preferably operable also to receive a fuel sensor output representing the current fuel level within the vehicle's fuel tank or tanks. During unloading this information can be used to determine the destabilising affect on the vehicle's resultant centre of gravity of the current weight of fuel carried in the off-centre fuel tank(s).

A preferred embodiment of the invention will now be described by way of example with reference to the accompanying drawings.

BRIEF DESCRIPTION OF THE DRAWINGS

Figures 1a and 1b are schematic rear views of a load tipping vehicle on horizontal ground with the tipping carrier, respectively, horizontal and lifted;
Figs 2a and 2b are similar rear schematic views of a load tipping vehicle, but on ground which slopes laterally of the vehicle;
Figure 3 is a partly schematic diagram illustrating the basic components of a load monitoring system for a road vehicle according to the present invention;
Figure 4 is a block schematic diagram of the electronic control unit of the system shown in figure 3;
Figure 5 is a schematic illustration of the mounting positions of the components of the figure 3 system as applied to a two-axled tipper lorry;
Figure 6 is a sectional view of shear-pin sensor used in the system of fig. 5;
Fig 7 illustrates a strain link which can be used in a load monitoring system of the present invention in place of the strain link of fig 6;
Fig 8 is a side elevational view of the fig 5 lorry, shown with the load carrier "down";
Fig 9 is a side elevational view of the fig 5 lorry shown with the load carrier in a lifted position; and
Figs. 10a and 10b are schematic illustrations of the change in forward and rear weight components of the carrier load for changing inclination of the tipping vehicle.

DESCRIPTION OF THE PREFERRED EMBODIMENTS

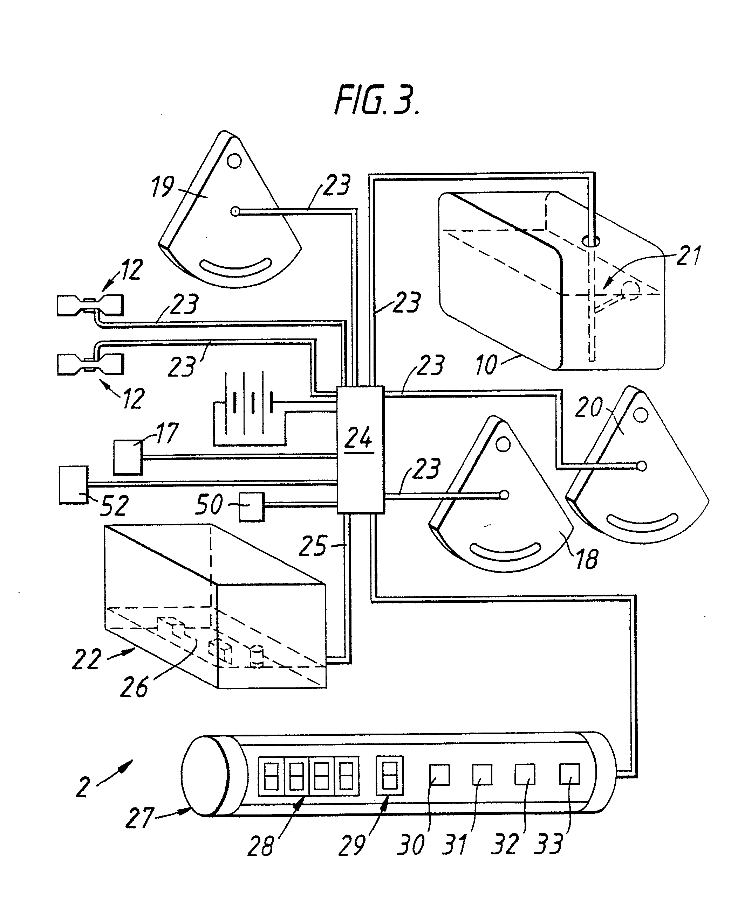

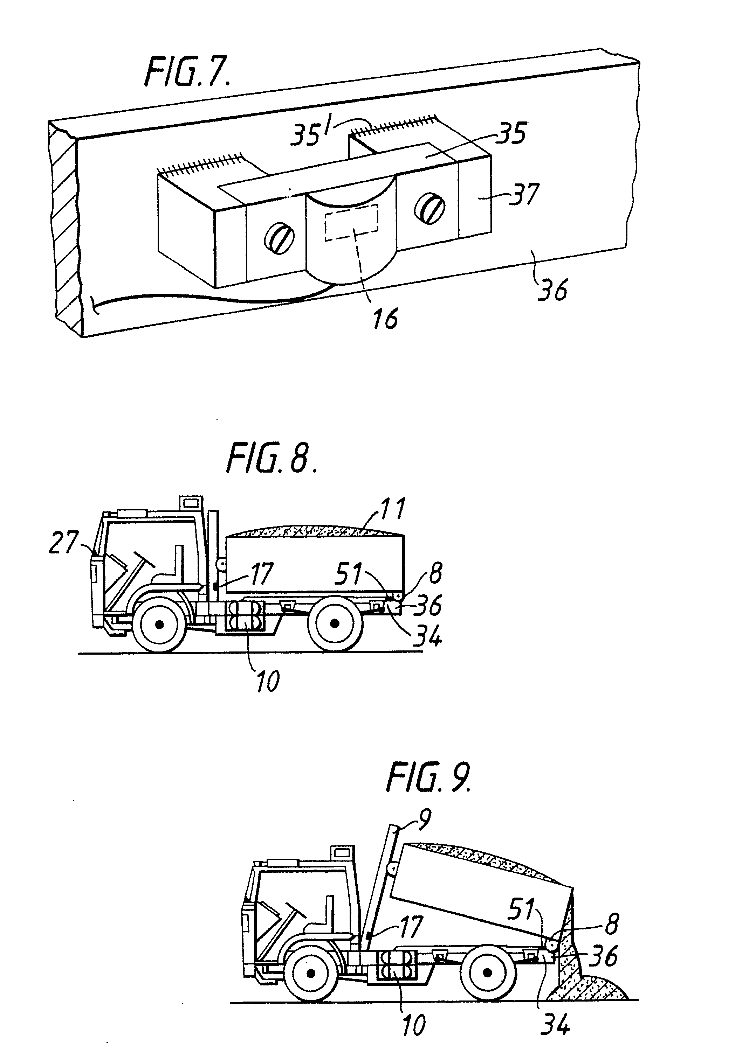

With reference to figures 3, 5, 8 and 9 a commercial road vehicle 1 to which a system 2 according to the present invention is applicable comprises a tipping lorry having a chassis 3 supported by front and rear wheeled axles 4 and 5 respectively, a driver's cab 6 and a load carrier 7 mounted on the chassis 3 by a pair of rear hinges 8 axially aligned transverse the longitudinal axis of the vehicle at the rear end of the chassis, a hydraulic ram 9 at the front end of the body 7, and a fuel tank 10. The ram 9 is actuable to lift the front end of the body 7 so as to cause it to turn about the hinges 8 for disposing of a load 11 carried by the carrier 7, as shown in fig. 9. In normal use, the base of the carrier 7 rests on the chassis 3 between the ram 9 and the rear hinges 8, but for the performance of a weighing operation, to be described later, the ram can be actuated to lift the load carrier 7 slightly (e.g. by $1° - 2°$) relative to the chassis so that the total weight of the carrier 7 and the load 11 is borne by the hydraulic ram 9 and the rear hinges 8.

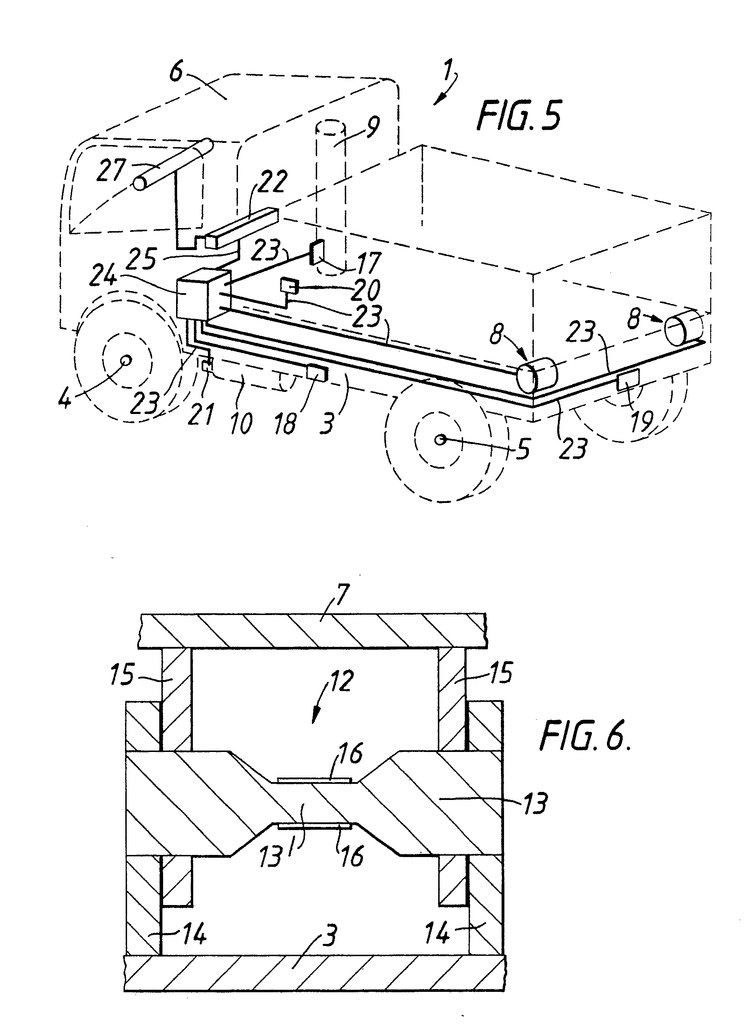

Each of the rear hinges 8 includes a shear pin sensor, for example as illustrated in fig. 6. with reference to figure 6, the shear pin 12 comprises a waisted hinge pin 13 fixed in a hinge aperture of a carrier support member 14 in turn fixed to the chassis 3, pivot member 15 which is fixed to the carrier 7 being pivotally mounted on this hinge pin 13. The load applied to the shear pin 12 due to the weight of the load carrier 7 creates a shear strain in the hinge pin 13, and this strain is detected by at least one strain gauge 16 mounted on the top and/or bottom of the central portion 13' of the pin 13.

A fluid pressure sensor 17 is mounted to the ram 9 to sense the hydraulic pressure therein, this pressure being indicative of that component of the weight of the carrier which is supported by the ram 9 whenever the carrier 7 is lifted from the chassis.

A first inclinometer 18 is mounted on the chassis for detecting longitudinal (i.e. front-to-back) inclination thereof the chassis. A second inclinometer 19 is mounted on the chassis for detecting lateral (i.e. side-to-side) inclination there, and a third inclinometer 20 is mounted on the load carrier 7 for detecting longitudinal inclination thereof the carrier. An inclinometer is an instrument which can provide a sensor output indicative of the inclination of a body to which it is attached, normally with respect to the horizontal. A typical commercially available form of inclinometer has a casing, a pendulum member suspended within the casing, and means which provides a signal which varies in accordance with the angular relationship between the casing and the pendulum.

A fuel sensor 21 is mounted on or in the fuel tank 10 for detecting the amount of fuel in the tank.

The outputs from the shear pin sensors 12, the hydraulic sensor 17, the inclinometers 18, 19 and 20 and the fuel sensor 21 are coupled to a microprocessor control unit 22 located in the drivers cab 6, by way of individual leads 23, a junction box 24 and a common cable 25. The control unit 22 has an electronics board 26 carrying a microprocessor and is coupled to a display and control console 27 positioned suitably within the drivers cab for operation and viewing by the driver. In the embodiment shown, the console 27 has a tube-shaped outercasing with apertures for a four-digit numerical display panel 28, a mode indicator 29 and four operating buttons 30, 31, 32 and 33, the functions for which will be discussed later.

Although the shear pins of fig 6 are used in the embodiment of fig 5, load sensor outputs indicative of the rear component of the load carrier weight could alternatively be derived from strain links 51 attached to opposite sides of the rear of the chassis at positions where the load applied through the rear hinges has a predetermined strain effect. A suitable position is between the hinges and the rear spring rear hanging brackets 34 (see fig 8).

With reference to fig 7, such a strain link comprises a pair of conventional strain gauges 16 fixed on opposite surfaces of a strain link 35 which is secured to a longitudinal load-bearing side component 36 of the chassis at a rear position mentioned above. In this illustrated arrangement, the opposite ends of the strain link are securely bolted to respective ones of a pair of support feet 37, and these feet are welded at 35'to the component 36. In the absence of feet 37 or where welding to a chassis component 36 is undesirable it is possible to securely bolt the link 35 directly to the chassis component.

In use, the strain created in the pin 13 or the strain link 35 by the respective weight components is transmitted to the gauges 16. Each gauge will be connected, in a conventional manner, in one arm of a respective bridge network. An adjustable component in another arm of the bridge is used for calibration. The provision in each embodiment of the pair of gauges is to permit compensation for the affect of temperature change etc.

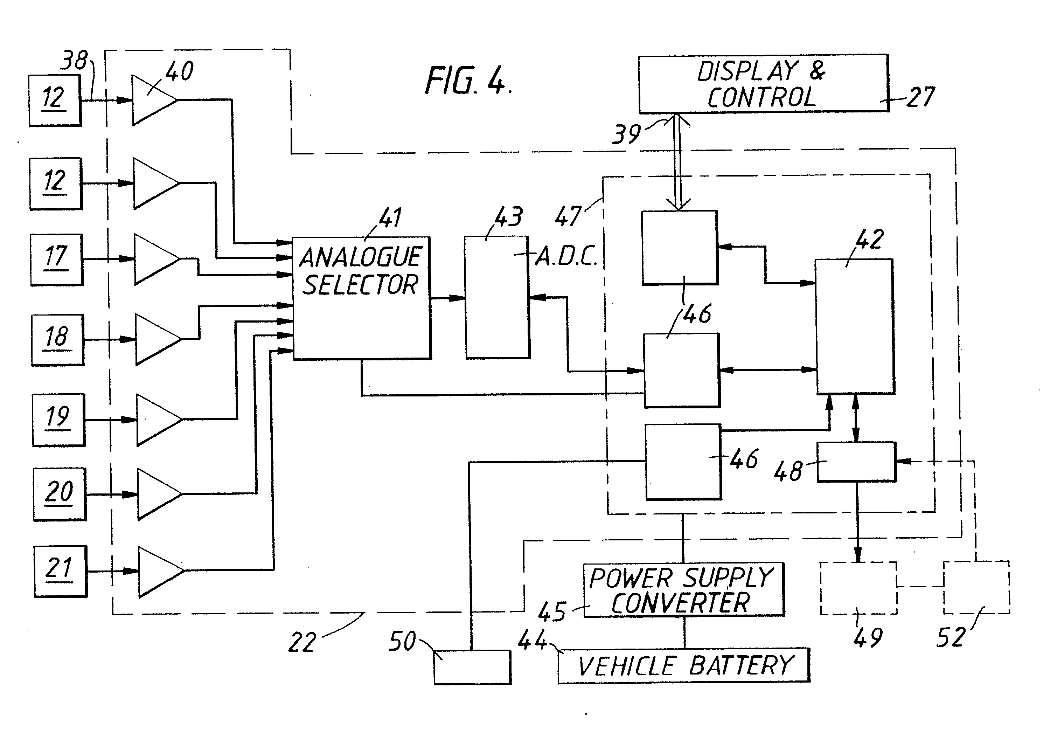

With reference now also to figure 4, the signals from the various sensors are routed via the junction box (not shown in this figure) to the control unit 22 which has a plurality of input line 38 for receiving these sensor signals. A cable 39 between the control unit and the console 27 comprises a number of lines which carry control signals generated in response to the operation of the buttons 30 to 33, to the microprocessor, and a plurality of output lines from the microprocessor for controlling the display panel 28 and mode indicator 29.

The sensor signals input to the control unit 22 are amplified in respective amplifiers 40, selected by an analogue selector 41 oontrolled by the microprocessor 42, and digitalised into a form suitable for use in the central processing unit of the microprocessor by an analogue-two-digital converter 43. The memory of the microprocessor contains instructions defining an operating program, and can temporarily store values produced by the calculating operations performed by the CPU during operation of the system. The microprocessor is arranged to be powered from the battery 44 of the vehicle via a suitable voltage converter 45. I-O units 46 receive inputs to and supply outputs from the microprocessor assembly 47. A serial input/output unit 48 can output information provided by the microprocessor 42 from the control unit 22, for example to a log recording device 49.

The microprocessor 42 is programmed to process the signals from the shear pins, inclinometers and fuel gauge, and to drive the digital display 28 to indicate the value of a required load parameter to indicate to the driver the distribution of the loading during loading so as to advise him of compliance with limits for axle and gross vehicle weights. During unloading, the processing of the sensor outputs is such as to detect or predict the occurrence of dangerous situations of vehicle instability. The required function of the controlled unit 22 is selected by operation of the buttons 30 to 33.

Button 31 is labelled "weight" and can be operated to cause the calculated load parameters to be displayed during loading. Button 32 is a calibration button which can be operated when certain calibration functions, to be described later, are required. Button 33 is a "time-set" button which is operated to set the time indicated by the digital display in a clock mode of the system. It should be mentioned that the microprocessor also includes a continually running clock, and the display is so controlled that it will show time, unless the reset, weight or calibration modes are selected.

The control system also includes a detector 50 for detecting engagement of the drive mechanism for the hydraulic ram when the driver instructs tipping for example, the sensor 50 can sense energisation of an indicating circuit which includes a lamp in the cab for displaying selection of tipping.

The mode indicator 29 is controlled to display a character indicating the present mode of the system. When placed into the "weight" indicating mode during loading, the system automatically and repetitively runs through a cycle of load parameter display. In the particular embodiment, this sequence is; front weight component (sensed by the sensor 17); rear weight component (sensed by the shear pins 12); total load, each parameter being identified by a given digit display by the mode indicator. In the embodiment, the microprocessor 42 is preprogrammed with the threshold values for the calculated load parameters corresponding to the legal requirements applicable to the particular vehicle concerned, and responds to any given load parameter exceeding the relevant threshold by interrupting the sequence and providing a visual warning of the overload conditions. In this embodiment, the warning comprises the repeated flashing of the mode display digit for the offending load parameter. When this occurs, the sequence may be resumed by a further operation of the weight button 31.

The "reset" button 30 allows for the resetting of the system after it has responded to the detection before or during unloading of a potentially dangerous situation of instability. The monitoring procedures for unloading will be discussed in greater detail later.

The system provides two calibration functions which can be selected by operation of the "calibration" button 32, followed by another one of the function buttons. The first of these functions is an initialisation operation which is carried out when the system is first installed in the vehicle for the purposes of calibration of the various different sensors. The program in the microprocessor assumes that the outputs of the sensors will have certain predetermined values under given load and vehicle conditions, and this initialisation procedure is necessary to establish this calibration of the sensors. In this first calbration mode, the "weight" button 25 is operated to select the different sensors in a predetermined sequence, the selected sensor being identified by the display of the mode indicator 29. For each selected sensor, a zero condition corresponding to a predetermined load or vehicle condition is established. Adjustments are made to set both the sensor output, and the amplified sensor output to zero in this predetermined condition. A predetermined non-zero condition is then applied, e.g. by placing a known load at a given position on the carrier 7, and the relevant amplification factor is adjusted to provide the require predetermined output. This procedure is repeated for each sensor in turn.

In a second calibration procedure, the system can be made to perform a self-checking routine. Again, the vehicle is placed under standard conditions, e.g. on level ground with no load, and the calibration button 32 is operated, followed by a predtermined sequence of the other buttons. In this mode, the system reads the sensor outputs in a predetermined sequence and compares them with predetermined reference values stored in the microprocessor memory. If any of the measured values is beyond a predetermined tolerance with respect to the respective reference value, the sensor reading is repeatedly flashed on the numerical display 28 to give a visual warning. The mode indicator 29 identifies the particular sensor concerned, and the relevant sensor and/or amplifier adjustment can then be made to bring the system back into calibration.

The microprocessor may be arranged to operate in conjunction with the distance measuring element of a tachograph 52 which is a time-distance measurement and recording device. The system can be operated to provide the driver with information as to his ability to continue to drive or need to take a break and the period of time in which the action must be carried out in compliance with the legal requirements of maximum driving hours in a predetermined period. This information can be retrieved in combination with the fuel and load measurements to provide a record for management purposes of time, distance, fuel, weight and unauthorised activity.

The microprocessor is adapted to compensate both during loading and unloading for fuel weight. During loading, the microprocessor adds to the sum of the calculated applied load and the vehicle unladen weight a factor corresponding to the maximum weight of fuel which the vehicle can carry, when determining the value for gross vehicle weight. When calculating the respective axle weights, the affect of this maximum fuel weight on both (or all) axles, which is known from the vehicle geometry, is added to the known effect of the unladen vehicle weight and the calculated effect of the measured load acting at the calculated position of its centre of gravity. Thus, regardless of the current fuel level at the time of loading the displaying load parameters will correspond to the full-tank condition of the vehicle. During unloading the affects on the vehicle's centre of gravity of reduced fuel contents can also be calculated and appropriate compensation made.

As discussed previously with reference to figure 10, the output of the shear pin and hydraulic pressure sensors for a given vehicle loading is affected significantly by the inclination of the vehicle to the horizontal. The legal limits for the load parameters are set for a horizontal disposition of the vehicle, but it frequently happens that loading-up of the vehicle takes place on an incline. The microprocessor in the embodiment of the present invention is programmed to compensate for any inclination of the vehicle to the horizontal so that the readings provided on the numerical display correspond to the values which the load parameters would assume in the horizontal position of the vehicle. To provide this function, the microprocessor is programmed in accordance with the known geometrical configuration of the vehicle and the predeterminable functions relating the vehicle inclination to the change in the effect of the load on the sensors.

It should be noted that instead of displaying the front and rear load weight components and payload, the system could be adapted to display other combinations of critical parameters, e.g. front and rear axle weights and either payload or gross vehicle weight.

Having thus described the load monitoring system itself, the manner in which it is applied to and used on the tipping vehicle during loading and unloading will now be discussed.

Loading

The vehicle is placed at the loading position, which may be on horizontal or sloping ground. If the driver decides that he must monitor the loading, he will press the "weight" button, and this will initiate a preliminary operation of the hydraulic ram to lift slightly the front end of the carrier 7 of the chassis. In this condition, the whole of the weight of the carrier 7 acts on the rear shear pin sensors and, through the operating fluid of the hydraulic ram, the pressure sensor 17. The load material is then loaded progressively on to the carrier 7, and the control unit operates intermittently to sample the load outputs and calculate and display the required parameters. The front components of the combined weight of the carrier and load is given by the output of the sensor 17, and the rear weight component is given by the combined outputs of the two shear pins 12. The proportion of each measured component due to the load can be calculated, given that the weight and geometry of the carrier 7 are known parameters. The longitudinal distribution of the load is represented by the relative magnitudes of the front and rear load components, and the lateral distribution is represented by the relative magnitudes of the left and right rear weight components. Accordingly, both the magnitude of the load and the position of its center of gravity can be calculated, and the affects of the load upon the front and rear axle weights determined. The load measurements will automatically be corrected for any longitudinal inclination of the vehicle, as sensed by either inclinometer 18 or 20. By observing the numerical and monitor displays 28 and 29, the driver can keep a check on payload and load distribution during the loading operation, and make any required adjustments. If, for example, the display displays cyclically front weight component, rear weight component and payload, he will compare the displayed figures with known predetermined limits so as to ensure proper load distribution and prevention of overloading. The system will itself indicate when any threshold is exceeded. For monitoring during loading, the output of a single inclinometer for longitudinal inclination sensing is sufficient.

## UNLOADING

The vehicle is driven to the site for unloading, which may be on level ground or on an incline having one or both of longitudinal and lateral incline components. Operation by the driver of the tipping switch in the cab initiates a compulsory tipping safety check procedure, the first step of which involves operation of the hydraulic ram to lift the carrier 7 slightly from the chassis. Again, the system computes from the load sensor outputs the magnitude of the load and the position of its center of gravity and then determines whether or not the combination of these parameters with measured values for longitudinal and/cr lateral inclination, as indicated by the outputs of the inclinometers 18 and 19, is acceptable for tipping to proceed, or it it could lead to a dangerous situation at some stage during tipping. If the combination is acceptable, tipping proceeds automatically. If not, the drive for the hydraulic ram is disabled and the carrier 7 is returned to the "down" position on the chassis. Also, a visual and/or audible alarm is given to the driver, advising him of the current unsafe conditions. Before re-attempting tipping at another location of the vehicle, the driver must operate the reset button so as to reset the measuring system.

Assuming that tipping is allowed to commence, the microprocessor continually monitors the sensor outputs to detect the predict the occurrence of unsafe conditions. The microprocessor is preprogrammed to continually calculate from the sensor outputs the current position of the centre of gravity both of the load and of the vehicle. It can also extrapalate from the current situation up to the maximum tipping angle, and determine whether or not, if tipping continues at the current longitudinal and lateral vehicle inclinations and if the load distribution remains unchanged, a dangerous situation will occur. This determination will depend very much upon the lateral inclination of the chassis, as indicated by the output of the inclinometer 19. Thus, for the laterally horizontal disposition of the vehicle as shown in figs 1a and 1b, no problem will arise even if the centre of gravity does shift substantially sideways towards one side of the vehicle due to uneven unloading, since the vertical line of action A passing through the centre of gravity will always lie between the rear wheels. For the inclination $\alpha$ of figs 2a and 2b, however, a dangerous situation may arise even if the centre of gravity remains centrally of the carrier 7 since the line of action A may shift sideways relative to the rear wheels further than in the case of the horizontal disposition of figure 1.

If at any tipping position the microprocessor does determines that a dangerous situation may arise upon further tipping, the hydraulic drive is immediately disabled and the hydraulic cylinder is rapidly emptied to lower the carrier 7 to the "down" position. Again, an alarm is provided, and the system must be reset by operation of the reset button 30 before tipping is re-attempted.

The microprocessor is also programmed to sense a sudden lateral shift of the centre of gravity of the load at a tipping angle above a predetermined threshold. At high tipping angles, such a sudden shift could,depending upon the vehicle's lateral inclination could pose a very serious hazzard, and accordingly the microprocessor is adapted to respond to a sudden change in the relative magnitudes of the outputs of the two rear shear pin sensors at high tipping angles, and in a manner dependent upon lateral inclination, to disable the drive for the hydraulic ram and return the load carrier 7 very quickly to the "down" position.

It is believed that the details of the calculations performed by the microprocessor and the programming thereof are matters of routine design to a software engineer and are subsidiary to the concepts of the functional and operational features of the system as described above.

It will be understood from the foregoing description that in its different aspects the invention provides significant operation of advantageous both in loading and unloading of a vehicle having a tipping mechanism, both for the purposes of ensuring compliance with legal loading limits and for avoiding accidental tipping of the vehicle during unloading.

The described system has numerous novel features which the skilled man will appreciate give rise to advantages. These are each independent aspects of the invention to be covered by the present application, irrespective of whether or not they are included within the scope of the following claims.

## Claims

1. A load monitoring system for a road vehicle (1) with a tipping load carrier (7), comprising load sensor means (12;51, 17) for mounting on the vehicle for sensing a plurality of weight components of the load carrier at longitudinally spaced positions thereof, signal processing means (22) for processing the sensor outputs from said load sensor means to provide at least one output indicative of the value of a required load parameter, and visual display means (28) for producing a visual representation of the output of the signal processing means characterised by inclination sensing means (18,19,20) for mounting on the vehicle for providing a sensor output indicative of the inclination of the load carrier (7) to a datum, e.g. the horizontal, and in that said signal processing means (22) comprises a computing apparatus which is adapted to process the sensor outputs from said load and also said inclination sensor means so that said at least one output is a computer output indicative of the value of the required load parameter, resolved to the datum position of the vehicle.

2. A system according to claim 1 wherein the load sensor means (12;51, 17) comprises a forward sensor (17) for sensing the hydraulic pressure in a forward carrier-lifting ram (9) mounted on the vehicle chassis (3), and a pair of rear load sensors (12) for mounting at opposite sides of the carrier (7) on parts of the vehicle chassis affected in a predetermined manner by the load applied to the chassis by the weight of the carrier.

3. A system according to claim 2 wherein the rear load sensors comprise shear pins (12) in respective pivot assemblies (8) by which the rear end of the carrier (7) is pivoted to the chassis.

4. A system according to claim 2 wherein the rear load sensors are strain links (51) for mounting on rear portions of chassis components on opposite sides of the vehicle.

5. A system according to any preceding claim, wherein said inclination sensing means comprises a single inclinometer (18) to be mounted on the vehicle for sensing longitudinal inclination of the vehicle.

6. A system according to any preceding claim wherein the computing apparatus (22) is operable to provide a plurality of said computer outputs indicative of the values of respective load parameters, and wherein the visual display means (28) is operable to display said load parameter values in a predetermined sequence.

7. A system according to claim 6 wherein said load parameters include respective weight components due to the load acting at the forward and rear ends of the load carrier (7).

8. A system according to claim 6 wherein said computing apparatus (22) is programmed to calculate from the sensed weight components the magnitude of a load on the carrier and the position of its centre of gravity, and to further calculate in accordance with predetermined vehicle parameters, components of axle weights of the loaded vehicle which are due to the load, the said load parameters which are displayed comprising the total axle weights calculated by the computing apparatus using the said components due to the load.

9. A system according to claim 1 wherein the computing apparatus (22) is also operable to process the outputs from the load sensor means (12;51,17) and the inclination sensing means (18,19,20) before and/or during tipping of the carrier for unloading, so as to determine or predict the occurrence during the unloading of a condition of vehicle instability.

10. A system according to claim 9 wherein the inclination sensor means comprises a plurality of inclinometers (18,19,20) for mounting on the vehicle to sense respective different forms of inclination.

11. A system according to claim 10 wherein the computing apparatus (22) is adapted to process the output of a first said inclinometer (18) indicative of longitudinal inclination of the vehicle chassis and the output of a second said inclinometer (19) indicative of the lateral inclination of the vehicle chassis.

12. A system according to claim 11 wherein the computing apparatus (22) is also adapted to process the output of a third said inclinometer (20) indicative of the longitudinal inclination of the load carrier (7) of the vehicle.

13. A system according to claim 10 wherein the computing apparatus is adapted to process the output of a first said inclinometer (20) indicative of the longitudinal inclination of the load carrier and the output of a second said inclinometer (19) indicative of the lateral inclination of the vehicle.

14. A load monitoring system for a road vehicle (1) with a tipping load carrier (7), comprising load sensor means (12;51, 17) for mounting on the vehicle for sensing a plurality of weight components of the carrier at spaced positions thereof, and signal processing means (22) for processing the sensor outputs from said load sensor means, characterised by inclination sensor means (18,19,20) for mounting on the vehicle, and in that said signal processing means comprises computing apparatus which is adapted to process the sensor outputs from the load and also from the inclination sensor means before and/or during tipping of the carrier (7) for unloading, so as to determine or predict the occurrence during the unloading of a condition of vehicle instability.

15. A system according to claim 14 wherein said inclination sensor means comprises first (18) and second (19) inclinometers for mounting on the vehicle chassis (3) to detect respectively, longitudinal and lateral inclination of the chassis.

16. A system according to claim 15 wherein the inclination sensor means includes a third inclinometer (20) for mounting on the load carrier (7) for sensing the longitudinal inclination of said load carrier.

17. A system according to claim 14 wherein said inclination sensor means comprises a first inclinometer (20) for mounting on the load carrier to detect longitudinal inclination thereof and a second inclinometer (19) for mounting on the vehicle to detect lateral inclination thereof.

18. A system according to claim 14 wherein said inclination sensor means comprises a single inclinometer (19) for mounting on the vehicle to detect lateral inclination thereof.

19. A system according to claim 14 wherein said computing apparatus (22) responds to a tipping instruction to perform a first operation, before tipping for unloading, for predicting the occurrence of a said vehicle condition, and a second operation during tipping for unloading, for continuously monitoring the outputs of the load (12;51,17) and inclination (18,19,20) sensor means for predicting a said occurrence of a said vehicle condition.

20. A system according to claim 14, wherein the computing apparatus (20) is operable when a said vehicle condition is so determined or predicted, to provide an inhibit output for inhibiting tipper, or further tipping of the carrier (7).

21. A system according to claim 20, further including alarm means operable in response to said inhibit output to provide a user-sensible alarm.

## Revendications

1. Système de contrôle de charge pour un véhicule routier (1) équipé d'un organe porteur de charge basculant (7), comportant des moyens détecteurs de charge (12; 51, 17) destinés à être montés sur le véhicule pour détecter plusieurs composantes de poids de l'organe porteur de charge, au niveau de positions de celui-ci espacées longitudinalement, des moyens de traitement de signaux (92) destinés à traiter les sorties de détecteurs provenant desdits moyens détecteurs de charge, pour fournir au moins une sortie indicative de la valeur d'un paramètre de charge requis, et des moyens d'affichage visuel (28) destinés à produire une représentation visuelle de la sortie des moyens de traitement de signaux, caractérisé par des moyens détecteurs d'inclinaison (18, 19, 20) destinés à être montés sur le véhicule pour fournir une sortie de détecteurs indicative de l'inclinaison de l'organe porteur de charge (7) par rapport à une donnée de référence, par exemple, l'horizontale, et en ce que lesdits moyens de traitement de signaux (22) comportent un appareil de calcul adapté pour traiter les sorties de détecteurs provenant desdits moyens détecteurs de charge et également desdits moyens détecteurs d'inclinaison, afin que ladite sortie soit une sortie d'ordinateur indicative de la valeur du paramètre de charge requis, ramenée à la position de référence du véhicule.

2. Système selon la revendication 1, dans lequel les moyens détecteurs de charge (12; 51, 17) comportent un détecteur avant (17) destiné à détecter la pression hydraulique régnant dans un piston de levage d'organe porteur avant (a) monté sur le châssis de véhicule (3), et deux détecteurs de charge arrière (12) destinés à être montés au niveau de côtés opposés de l'organe porteur (7), sur des parties du châssis de véhicule influencées d'une manière prédéterminée par la charge appliquée au châssis sous l'effet du poids de l'organe porteur.

3. système selon la revendication 2, dans lequel les détecteurs de charge arrière comportent des broches de cisaillement (12) prévues dans des ensembles de pivotement (8) respectifs à l'aide desquels l'extrémité arrière de l'organe porteur (7) est amenée à pivoter par rapport au châssis.

4. Système selon la revendication 2, dans lequel les détecteurs de charge arrière sont des bielles de contraintes (51) destinées à être montées sur des portions arrière d'éléments de châssis situées sur des côtés opposés du véhicule.

5. Système selon l'une quelconque des revendications précédentes, dans lequel lesdits moyens détecteurs d'inclinaison comportent un inclinomètre unique (18) destiné à être monté sur le véhicule pour détecter une inclinaison longitudinale de ce dernier.

6. système selon l'une quelconque des revendications précédentes, dans lequel l'appareil de calcul (22) est apte à opérer pour fournir plusieurs sorties d'ordinateur indicatives des valeurs de paramètres de charge respectifs, et dans lequel les moyens d'affichage visuel (28) sont aptes à opérer pour afficher lesdites valeurs de paramètres de charge dans un ordre prédéterminé.

7. Système selon la revendication 6, dans lequel lesdits paramètres de charge comprennent des composantes de poids respectives, dues à la charge agissant au niveau des extrémités avant et arrière de l'organe porteur de charge (7).

8. Système selon la revendication 6, dans lequel ledit appareil de calcul (22) est programmé pour, à partir des composantes de poids détectées, calculer l'amplitude d'une charge exercée sur l'organe porteur et la position de son centre de gravité, et pour, en fonction de paramètres de véhicule prédéterminés, calculer également des composantes de poids à l'essieu du véhicule chargé, dues à la charge, lesdits paramètres de charge qui sont affichés comprenant les poids à l'essieu totaux calculés par l'appareil de calcul à l'aide desdites composantes dues à la charge.

9. Système selon la revendication 1, dans lequel l'appareil de calcul (22) est également apte à opérer pour traiter les sorties provenant des moyens détecteurs de charge (12; 51, 17) et des moyens détecteurs d'inclinaison (18, 19, 20) avant et/ou pendant un basculement de l'organe porteur en vue d'un déchargement, afin de déterminer ou de prévoir l'apparition pendant le déchargement d'un état d'instabilité du véhicule.

10. Système selon la revendication 9, dans lequel les moyens détecteurs d'inclinaison comportent plusieurs inclinomètres (18, 19, 20) destinés à être montés sur le véhicule pour détecter différentes formes d'inclinaison respectives.

11. Système selon la revendication 10, dans lequel l'appareil de calcul (22) est adapté pour traiter la sortie d'un premier inclinomètre (18) indicative d'une inclinaison longitudinale du châssis de véhicule et la sortie d'un second inclinomètre (19) indicative de l'inclinaison latérale du châssis de véhicule.

12. Système selon la revendication 11, dans lequel l'appareil de calcul (22) est également adapté pour traiter la sortie d'un troisième inclinomètre (20) indicative de l'inclinaison longitudinale de l'organe porteur de charge (7) du véhicule.

13. Système selon la revendication 10, dans lequel l'appareil de calcul est adapté pour traiter la sortie d'un premier inclinomètre (20) indicative de l'inclinaison longitudinale de l'organe porteur de charge et la sortie d'un second inclinomètre (19) indicative de l'inclinaison latérale du véhicule.

14. Système de contrôle de charge pour un véhicule routier (1) équipé d'un organe porteur de charge basculant (7), comportant des moyens détecteurs de charge (12; 51, 17) destinés à être montés sur le véhicule pour détecter plusieurs composantes de poids de l'organe porteur au niveau de positions espacées de celui-ci, et des moyens de traitement de signaux (22) pour traiter les sorties de détecteurs provenant desdits moyens détecteurs de charge, caractérisé par des moyens détecteurs d'inclinaison (18, 19, 20) destinés à être montés sur le véhicule, et en ce que lesdits moyens de traitement de signaux comportent un appareil de calcul adapté pour traiter les sorties de détecteurs provenant des moyens détecteurs de charge et également des moyens détecteurs d'inclinaison avant et/ou pendant un basculement de l'organe porteur (7) en vue d'un déchargement, afin de déterminer ou de prévoir l'apparition pendant le déchargement d'un état d'instabilité du véhicule.

15. Système selon la revendication 14, dans lequel lesdits moyens détecteurs d'inclinaison comportent un premier inclinomètre (18) et un second inclinomètre (19) destinés à être montés sur le châssis de véhicule (3) pour détecter respectivement une inclinaison longitudinale et une inclinaison latérale du châssis.

16. Système selon la revendication 15, dans lequel les moyens détecteurs d'inclinaison comportent un troisième inclinomètre (20) destiné à être monté sur l'organe porteur de charge (7) pour détecter l'inclinaison longitudinale dudit organe porteur de charge.

17. Système selon la revendication 14, dans lequel lesdits moyens détecteurs d'inclinaison comportent un premier inclinomètre (20) destiné à être monté sur l'organe porteur de charge pour détecter une inclinaison longitudinale de celui-ci et un second inclinomètre (19) destiné à être monté sur le véhicule pour détecter une inclinaison latérale de celui-ci.

18. Système selon la revendication 14, dans lequel lesdits moyens détecteurs d'inclinaison comportent un inclinomètre unique (19) destiné à être monté sur le véhicule pour détecter une inclinaison latérale de celui-ci.

19. Système selon la revendication 14, dans lequel ledit appareil de calcul (22) répond à une instruction de basculement pour effectuer une première opération, avant un basculement en vue d'un déchargement, afin de prévoir l'apparition dudit état du véhicule, et une seconde opération, pendant un basculement en vue d'un déchargement, afin de contrôler d'une manière continue les sorties des moyens détecteurs de charge (12; 51, 17) et des moyens détecteurs d'inclinaison (18, 19, 20), en vue de prévoir ladite apparition dudit état du véhicule.

20. système selon la revendication 14, dans lequel l'appareil de calcul (22) est apte à opérer pour, lorsque ledit état du véhicule est ainsi déterminé ou prévu, fournir une sortie de blocage afin de bloquer un dispositif de basculement ou d'empêcher l'organe porteur (7) de continuer à basculer.

21. Système selon la revendication 20, comportant également des moyens d'alarme aptes à opérer pour, en réponse à ladite sortie de blocage, fournir une alarme perceptible par un utilisateur.

## Ansprüche

1. Last-Überwachungseinrichtung für ein Straßenfahrzeug (1) mit einem Last-Kippträger (7), das eine Last-Sensoreinrichtung (12; 51, 17) zur Anbringung am Fahrzeug zur Messung mehrerer Gewichtskomponenten des Lastträgers an mit Längsabstand angeordneten Stellen hiervon, eine Signal-Verarbeitungseinrichtung (22) zum Verarbeiten der Sensorausgänge aus der Last-Sensoreinrichtung, um mindestens einen Ausgang zu liefern, der für einen geforderten Last-Parameter representativ ist, und eine optische Anzeigeeinrichtung (28) aufweist, um eine optische Darstellung des Ausgangs der Signal-Verarbeitungseinrichtung zu erzeugen, gekennzeichnet durch eine Neigungs-Meßeinrichtung (18, 19, 20) zum Anbringung am Fahrzeug und zum Liefern eines Sensorausgangs, der für die Neigung des Lastträgers (7) gegenüber einer Bezugsgröße, z.B. der Horizontalen, repräsentativ ist, und dadurch, daß die Signal-Verarbeitungseinrichtung (22) eine Computereinrichtung aufweist, die dazu eingerichtet ist, die Sensorausgänge aus der Last-Sensoreinrichtung und auch aus der Neigungs-Meßeinrichtung so zu verarbeiten, daß mindestens ein Ausgang ein Computerausgang ist, der repräsentativ ist für den geforderten Last-Parameter, aufgelöst nach der Bezugslage des Fahrzeugs.

2. Einrichtung nach Anspruch 1, worin die Last-Sensoreinrichtung (12; 51, 17) einen vorderen Fühler (17) zum Messen des hydraulischen Drucks in einem vorderen Träger-Hubkolben (9), der am Fahrzeug-Fahrgestell (3) angebracht ist, und ein Paar hinterer Lastfühler (12) zur Anbringung an den gegenüberliegenden Seiten des Trägers (7) an Teilen des Fahrzeug-Fahrgestells aufweist, die in vorbestimmter Weise durch die Last beeinflußt werden, die durch das Gewicht des Trägers auf das Fahrgestell einwirkt.

3. Einrichtung nach Anspruch 2, worin die hinteren Lastfühler Scherstifte (12) in jeweiligen Schwenkanordnungen (8) aufweisen, durch welche das hintere Ende des Trägers (7) schwenkbar am Fahrgestell gelagert ist.

4. Einrichtung nach Anspruch 2, worin die hinteren Lastfühler Spannungs-Zwischenglieder (51) zur Anbringung an den hinteren Abschnitten von Fahrgestellkomponenten auf gegenüberliegenden Seiten des Fahrzeugs sind.

5. Einrichtung nach jedem vorangehenden Anspruch, worin die Neigungs-Meßeinrichtung ein einziges Inklinometer (18) aufweist, das am Fahrzeug zur Messung der Fahrzeug-Längsneigung anzubringen ist.

6. Einrichtung nach jedem vorangehenden Anspruch, worin die Computereinrichtung (22) so betreibbar ist, daß sie mehrere der genannten Computerausgänge liefert, die für die Werte der jeewiligen Lastparameter representativ sind, und worin die optische Anzeigeeinrichtung (28) so betreibbar ist, daß sie die Lastparameterwerte in einer vorbestimmten Reihenfolge anzeigt.

7. Einrichtung nach Anspruch 6, worin die Lastparameter die jeweiligen Gewichtskomponenten umfassen, die auf die Last zurückgehen, die am vorderen und hinteren Ende des Lastträgers (7) wirksam ist.

8. Einrichtung nach Anspruch 6, worin die Computereinrichtung (22) dazu programmiert ist, aus den gemessenen Gewichtskomponenten die Größe einer am Träger angreifenden Last und die Lage ihres Schwerpunktes zu errechnen und ferner in Übereinstimmung mit vorbestimmten Fahrzeugparametern die Komponenten der Achslasten des beladenen Fahrzeugs zu errechnen, die auf die Last zurückgehen, wobei die angezeigten Lastparameter die Gesamt-Achslasten aufweisen, die von der Computereinrichtung unter Verwendung der auf die Last zurückgehenden komponenten errechnet wurden.

9. Einrichtung nach Anspruch 1, worin die Computereinrichtung (22) auch dazu betreibbar ist, die Ausgänge aus der Last-Sensoreinrichtung (12; 51, 17) und der Neigungs-Meßeinrichtung 19, 20) vor und/oder während des Kippens des Trägers zum Entladen zu verarbeiten, um das Auftreten eines Zustandes fehlender Fahrzeugstabilität während des Entladens zu bestimmen oder vorherzusagen.

10. Einrichtung nach Anspruch 9, worin die Neigungs-Meßeinrichtung mehrere Inklinometer (18, 19, 20) zur Anbringung am Fahrzeug umfaßt, um unterschiedliche Formen der Neigung zu messen.

11. Einrichtung nach Anspruch 10, worin die Computereinrichtung (22) dazu eingerichtet ist, den Ausgang eines ersten Inklinometeres (18) zu verarbeiten, der repräsentativ ist für die Längsneigung des Fahrzeug-Fahrgestells, und den Ausgang eines genannten zweiten Inklinometeres (19), der repräsentativ ist für die Querneigung des Fahrzeug-Fahrgestells.

12. Einrichtung nach Anspruch 11, worin die Computereinrichtung (22) auch dazu eingerichtet ist, den Ausgang eines dritten Inklinometers (20) zu verarbeiten, der repräsentativ ist für die Längsneigung des Lastträgers (7) des Fahrzeugs.

13. Einrichtung nach Anspruch 10, worin die Computereinrichtung dazu eingerichtet ist, den Ausgang eines ersten Inklinometers (20) zu verarbeiten, der repräsentativ ist für die Längsneigung des Lastträgers, und den Ausgang eines genannten zweiten Inklinometers (19), der repräsentativ ist für die Querneigung des Fahrzeugs.

14. Last-Überwachungseinrichtung für ein Straßenfahrzeug (1) mit einem Last-Kippträger (7), das eine Last-Sensoreinrichtung (12; 51, 17) zur Anbringung am Fahrzeug zur Messung mehrerer Gewichtskomponenten des Trägers an mit Abstand angeordneten Stellen hiervon und eine Signal-Verarbeitungseinrichtung (22) zum Verarbeiten der Sensorausgänge aus der Last-Sensoreinrichtung aufweist, gekennzeichnet durch eine Neigungs-Meßeinrichtung (18, 19, 20) zur Anbringung am Fahrzeug, und dadurch, daß die Signal-Verarbeitungseinrichtung eine Computereinrichtung aufweist, die dazu eingerichtet ist die Sensorausgänge aus der Last-Sensoreinrichtung und auch aus der Neigungs-Meßeinrichtung vor und/oder während des Kippens des Trägers (7) zum Entladen zu verarbeiten, um das Auftreten eines Zustandes fehlender Fahrzeugstabilität während des Entladens zu bestimmen oder vorherzusagen.

15. Einrichtung nach Anspruch 14, worin die Neigungs-Meßeinrichtung ein erstes (18) und ein zweites (19) Inklinometer zur Anbringung am Fahrzeug-Fahrgestell (3) aufweist, um die Längs- bzw. Querneigung des Fahrgestells zu messen.

16. Einrichtung nach Anspruch 15, worin die Neigungs-Meßeinrichtung ein drittes Inklinometer (20) zur Anbringung am Lastträger (7) aufweist, um die Längsneigung des Lastträgers zu messen.

17. Einrichtung nach Anspruch 14, worin die Neigungs-Meßeinrichtung ein erstes Inklinometer (20) zur Anbringung am Lastträger zum Ermitteln seiner Längsneigung und ein zweites Inklinometer (19) zur Anbringung am Fahrzeug zum Ermitteln seiner Querneigung aufweist.

18. Einrichtung nach Anspruch 14, worin die Neigungs-Meßeinrichtung ein einziges Inklinometer (19) zur Anbringung am Fahrzeug aufweist, um dessen Querneigung zu ermitteln.

19. Einrichtung nach Anspruch 14, worin die Computereinrichtung (22) auf eine Kippanweisung anspricht, um eine erste Operation noch vor dem Kippen zum Entladen durchzuführen um das Auftreten eines genannten Fahrzeugzustands vorherzusagen und eine zweite Operation während des Kippens zum Entladen um die Ausgänge der Last-Sensoreinrichtung (12;51, 17) und der Neigungs-Meßeinrichtung ( 18, 19, 20) ständig zu Überwachen, um das Auftreten des genannten Fahrzeugzustands vorherzusagen.

20. Einrichtung nach Anspruch 14, worin die Computereinrichtung (20) betreibbar ist, wenn der Fahrzeugzustand so bestimmt oder vorhergesagt ist, daß sie einen Sperrausgang liefert, um den Kipper zu sperren, oder den Träger (7) weiter zu kippen.

21. Einrichtung nach Anspruch 20, ferner mit einer Alamreinrichtung, die so betreibbar ist, daß sie auf den Sperrausgang anspricht, um ein für den Benutzer vermerkliches Signal zu liefern.

FIG.1A.

FIG.1B.

FIG.2A.

FIG.2B.

# FIG. 3.

FIG. 4.

FIG.5

FIG.6.

## FIG.7.

## FIG.8.

## FIG.9.

## FIG.10a.

## FIG.10b.